# EUROPEAN PATENT SPECIFICATION

(11) **EP 2 602 594 B1**
(45) Date of publication and mention of the grant of the patent: **07.02.2018**
(21) Application number: 11306613.8
(22) Date of filing: 05.12.2011
(51) Int. Cl.: G01D 5/14, G01D 5/245, G01D 5/244, G01P 3/487

(54) **Sensor for measuring a periodic signal comprising several harmonics**
Sensor zum Messen eines periodischen Signals mit mehreren Harmonien
Capteur pour mesurer un signal périodique comprenant plusieurs harmoniques

(43) Date of publication of application: 12.06.2013
(73) Proprietor: NTN-SNR Roulements, 74010 Annecy (FR)
(72) Inventor: Peterschmitt, Cyril, 74000 Annecy (FR); Duret, Christophe, 74600 Quintal (FR); Paul, Johannes, 35633 Lahnau (DE); Marien, Jan, 35633 Lahnau (DE)
(74) Representative: Sayettat, Julien Christian

(56) References cited:
- EP-B1- 0 235 750
- DE-A1- 4 208 154
- DE-A1- 10 020 978
- DE-A1- 10 041 087
- FR-A1- 2 869 980
- US-A- 4 594 548
- US-B1- 6 573 710

## Description

The invention relates to a sensor for measuring a periodic signal comprising several harmonics wherein the first harmonic has a λ spatial period. The invention relates also to a use of such a sensor to measure either angular or linear data of a member delivering a magnetic sine shape signal or to measure periodic mechanical deformations of a structural body.

The invention applies in particular to the field of measuring magnetic periodic signal, for example sine shape signal, notably to determine angular data, such as the position or the speed of the rotating member of a bearing in relation to the stationary member of said bearing.

In order to do so, it is known from the document FR-2 792 403 to use an encoder capable of transmitting a magnetic sine shape signal and a sensor including a plurality of sensing elements which are linearly equally distributed, said sensing elements each being capable of delivering a signal which is representative of the signal transmitted by the encoder.

The sensing elements can be arranged in a net of sensing elements connected in series and/or in parallel. The net forms a group of sensing elements if there are exactly two connectors available to contact the group to an electrical circuit, V_{G} defining the voltage drop over the group of sensing elements.

This document further anticipates combining the delivered signals in order to form two outputs in quadrature and of the same amplitude, which are representative of the angular position of the rotating member in relation to the stationary member.

The invention also applies to the measurement of a mechanical periodic signal, such as deformation sine shape one as described, for example, in the document FR-2 869 980, in which sine shape outputs in quadrature and of the same amplitude are formed by combining signals delivered by sensing areas.

Notably in these two types of application, the periodic signal is in fact pseudo-sinusoidal by comprising a first harmonic and several other harmonics which are multiple of said first harmonic.

For example, if one approaches the encoder, the signal becomes more "square" and, if it moves away, the signal takes a more "triangular" shape. These phenomena result in the appearance of harmonics within the signal. In the same way, the deformation periodic signal comprises also harmonics.

The problem is that the algorithms or devices that use these signals to determine the angular or the deformation data have degraded performance in the presence of harmonics. For example, we can obtain an error of period, of phase or a modulation of amplitude within the outputs. To try to limit this problem, it is thus necessary to complicate the algorithms with more calculations and more calibration parameters. An encoder with resisitve elements arranged in a bridge configuration in order to filter third harmonics is known from EP 0 235 750 B1. The purpose of the invention is notably to solve the above mentioned problem by proposing a sensor for measuring a periodic signal wherein harmonics are filtered.

To that end, and according to a first aspect, the invention relates to a sensor for measuring a periodic signal comprising several harmonics wherein the first harmonic has a λ spatial period, said sensor comprising an electrical circuit of G resistive groups arranged in a current loop circuit and having a geometrical barycentre spaced by λ/G + kλ (k being an integer) from each other, each of said groups comprising at least one set of p resistive elements connected in series and having a geometrical barycentre spaced by λ/pn + iλ (i being an integer) from each other, n being different from G, in order to filter at least harmonics n [2n] of the signal, said sensor comprising determination means adapted for determining at least one output which is representative of the signal, said output comprising a combination of at least some voltages V_{G} across the G resistive groups.

According to further aspects, the invention relates to a use of such a sensor to measure either angular or linear data of a rotating or moving member delivering a magnetic sine shape signal or to measure periodic mechanical deformations of a structural body.

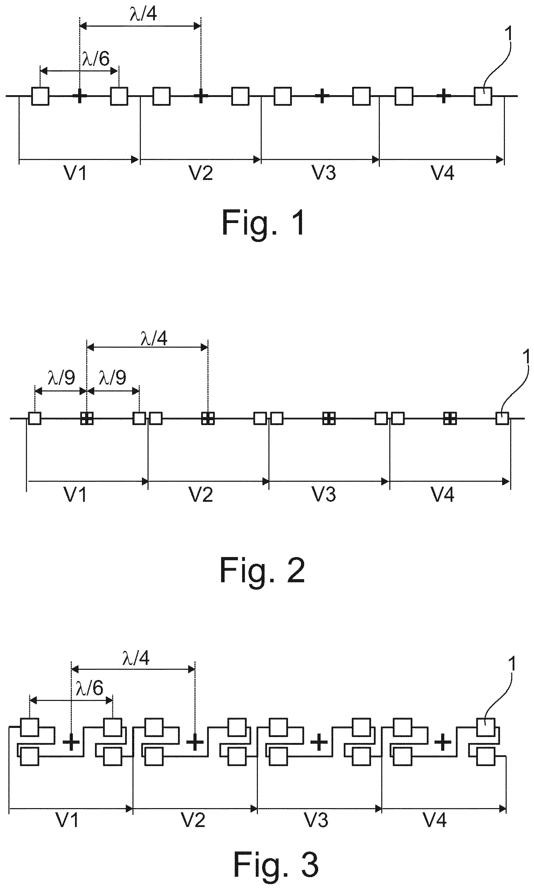

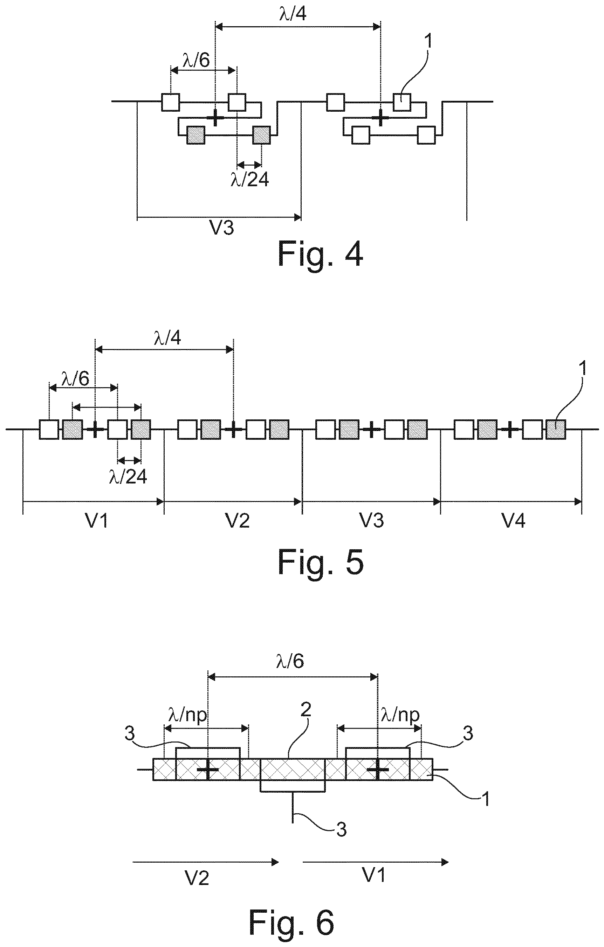

Other objects and advantages will become apparent in the following description made with reference to the appended figures, in which figures 1 to 5 each represents schematically an embodiment for the arrangement of the resistive elements of a sensor according to the invention and figure 6 represents resistive groups formed in a single strip of resistive material.

The invention relates to a sensor for measuring a periodic signal comprising several harmonics wherein the first harmonic has a λ spatial period. The n^{th} harmonic has a λ/n spatial period and we use below the terminology harmonics n [2n] (i.e. n modulo 2n) for n^{th}, 3n^{th}, 5n^{th}, ... harmonics family. In particular, the signal can be sinusoidal by nature and at least a portion of which can be correctly approximated by a sine curve.

To do so, the sensor includes a plurality of resistive elements 1, each of which being capable of delivering a voltage which is representative of the signal being detected. Accordingly, each resistive group is capable of delivering a voltage V_{G} which is representative of the signal being detected.

According to two specific applications, the periodic signal is an angular position signal for a rotating member in relation to a stationary member, or a periodic deformation signal for a structural body. The invention could also be applied to linear encoders delivering periodic signal.

In the first application, anticipated in particular in the document FR-2 792 403, the signal can be transmitted by a multipole magnetic encoder with pole length of Lp (λ = 2Lp). Alternatively, the periodic signal could be delivered by the modulation of a constant biasing magnetic field with softmagnetic gear teeth.

As a matter of fact, by interconnecting this type of encoder with the rotating member, the transmitted signal is of a sine shape nature and varies according to the angular position of said encoder in relation to the sensor. In order to measure the magnetic pseudo-sinusoidal signal, the resistive elements 1 can include, in particular, Hall effect sensors or magnetoresistors (AMR, GMR or TMR).

In the second application, anticipated in particular by the document FR-2 869 980, the signal is induced by the periodic deformations of the structural body, and the resistive elements 1 are strain gauges arranged on said body. In particular, the strain gauges can be of a resistive or piezoresistive type.

However, the invention is not limited to these two specific applications, and can be applied to another type of periodic signal, e.g. whether it be of a mechanical, optical, thermal or acoustic nature, the nature of the resistive elements 1 then being chosen accordingly, in order to be capable of sensing the signal used.

In relation with the figures, the sensor comprises an electrical circuit of G resistive groups arranged in a current loop circuit and having a geometrical barycentre spaced by λ/G from each other. Thus the sensor comprises G virtual measurement points spaced by λ/G from each other. In addition, each of the groups comprises at least one set of p resistive elements 1 connected in series and having a geometrical barycentre spaced by λ/pn from each other, n being different from G, in order to filter at least harmonics n [2n] of the signal. In particular, each of the resistive elements 1 is small compared to λ and even to λ/n.

The sensor further comprises determination means adapted for determining at least one output which is representative of the signal, said output comprising a combination of at least some voltages V_{G} across the G resistive groups. In particular the output is a linear combination of the voltages V_{G}.

In relation with figure 1, we describe below the spatial filtering of harmonics 3 [6] (n = 3) of a sine shape signal. In this embodiment, four groups of two resistive elements 1 are spaced by λ/4, said elements being spaced by λ/6 within the group. In addition, those groups are arranged in a current loop circuit and the determination means are adapted for measuring the voltages V₁ to V₄ across each of said resistive groups.

Figures 1 and 2 display a condensed configuration wherein the resistive elements 1 of each group are in the most condensed spatial distribution. However, the filtering effect remains the same for non condensed configurations if one or more resistive elements 1 are spatially moved by iλ, i being an integer. For example, on figure 1, two resistive elements 1 of a group could be shifted by λ/6 + λ, i.e 7λ/6, this configuration will deliver the same filtering effect than the one of figure 1. In other examples, not a single resistive element 1 is shifted by λ but the complete group, said group having thus a geometrical barycentre spaced by λ/G + Kλ, k being an integer.

The sequence of the resistive elements 1 in series within a group is also of no importance as regards the filtering effect. For example, two equivalent embodiments are as follow:
- the first resistive element 1 is electrically connected with its neighbor element 1 spaced by λ/pn which is electrically connected to the second next neighbor element 1 (figure 2);
- the first resistive element 1 is electrically connected with its second next neighbor element 1 spaced by 2λ/pn which is connected to the next neighbor element 1 spaced by λ/pn from said first element.

The sensor can also comprise calculation means adapted for calculating SIN and COS outputs by linear combination of the voltages V₁ to V₄. As described in the document FR-2 904 412, we can use SIN = (V₁ - V₂) - (V₃ - V₄) and COS = 2 (V₂ - V₃) in order to determine the position or the speed of an encoder. In a variant, we can use COS = (V₂ - V₃) - (V₄ - V₁).

The SIN and COS outputs of the current loop circuit are linear combinations of V₁ to V₄ with additions and subtractions. Considering the different voltage measurements are spatial samples of the sine shape signal, these combinations have therefore filtering capabilities. Let's assume that the phases of the different harmonics of V₁ are 0 for simplification, we have the following table:

| Harmonics number | Phase | | | |
|---|---|---|---|---|
| | V₁ | V₂ | V₃ | V₄ |
| 1 | 0 | π/2 | π | 3π/2 |
| 2 | 0 | π | 0 | π |
| 3 | 0 | 3π/2 | π | π/2 |
| 4 | 0 | 0 | 0 | 0 |
| 5 | 0 | π/2 | π | 3π/2 |
| 6 | 0 | π | 0 | π |
| 7 | 0 | 3π/2 | π | π/2 |
| 8 | 0 | 0 | 0 | 0 |
| ... | | | | |

This table means:
- when you add two columns with a phase difference of π [2π], for example V₁+V₄ or V₂+V₃ for the second harmonic, you remove the corresponding harmonic;
- when you subtract two columns with a phase difference of 0 [2π], for example V₁-V₂ or V₃-V₄ for the fourth harmonic, you remove the corresponding harmonic.

This means that within the above mentioned SIN output all even harmonics are filtered and within the COS output harmonics 4, 8 and 12 are removed. If we choose (V₂ - V₃) - (V₄ - V₁) for COS, then all even harmonics are also removed from said COS output.

In the sensor, the V₁ to V₄ voltages are in fact the addition of the voltage across each of the resistive elements 1. The table below contains the corresponding phase differences of the sine shape signal seen by both resistive elements 1, for the different harmonics:

| Harmonics number | Phase differences | | | | | | | |
|---|---|---|---|---|---|---|---|---|
| | λ/2 | λ/3 | λ/4 | λ/5 | λ/6 | λ/7 | λ/8 | ... |
| 1 | π | 2π/3 | π/2 | 2π/5 | π/3 | 2π/7 | π/4 | |
| 2 | 0 | 4π/3 | π | 4π/5 | 2π/3 | 4π/7 | π/2 | |
| 3 | π | 0 | 3π/2 | 6π/5 | π | 6π/7 | 3π/4 | |
| 4 | 0 | 2π/3 | 0 | 8π/5 | 4π/3 | 8π/7 | π | |
| 5 | π | 4π/3 | π/2 | 0 | 5π/3 | 10π/7 | 5π/4 | |
| 6 | 0 | 0 | π | 2π/5 | 0 | 12π/7 | 6π/4 | |
| 7 | π | 2π/3 | 3π/2 | 4π/5 | π/3 | 0 | 7π/4 | |
| 8 | 0 | 4π/3 | 0 | 6π/5 | 2π/3 | 2π/7 | 0 | |
| 9 | π | 0 | π/2 | 8π/5 | π | 4π/7 | π/4 | |
| 10 | 0 | 2π/3 | π | 0 | 4π/3 | 6π/7 | π/2 | |
| ... | | | | | | | | |

As soon as the phase difference is π, the corresponding harmonic is removed by the addition of both voltages across resistive elements 1. Consequently, by spacing the p resistive elements 1 by λ/pn + iλ, the harmonics n [2n] are filtered.

In the embodiment of figure 1, harmonics 3, 9, 15 ... of the SIN and COS outputs are thus filtered by using, for each λ/4 spaced groups, two λ/6 spaced resistive elements 1. Thus, in this embodiment, the first harmonic remains and the first non filtered harmonics for the SIN are 5, 7, 11 .... For the COS made with 2(V₂-V₃), the first harmonic remains and the first non filtered harmonics are 2, 5, 6, 7 .... For the COS made with (V₂ - V₃) - (V₄ - V₁), the first harmonic remains and the first non filtered harmonics are 5, 7, 11....

Figures 2 to 5 each show an embodiment wherein the same SIN and COS outputs are determined from the current loop circuit of the sensor. On figure 2, three resistive elements 1 are spaced from λ/9 in order to filter harmonics 3, 9, 15, ... of the SIN and COS outputs.

In the embodiments shown, the repartition of the resistive elements 1 within the groups are identical but, notably as regards the amplitude of the voltage V_{G} and/or the combination of said voltage, the groups can present a different repartition and/or number of resistive elements 1.

Figures 3 to 5 show embodiments wherein at least one of the G resistive groups comprises at least two sets of p resistive elements 1 connected in series. More particularly, on figure 3, two sets of two resistive elements 1 are each spaced by λ/6 to filter the same harmonics than in figure 1 but with increased amplitude for the outputs.

On figures 4 and 5, the two sets of p resistive elements 1 are shifted by λ/2m from each other, m being different from n, the outputs comprising a combination of at least some voltages V_{G} across the G resistive groups in order to further filter harmonics m [2m] of the signal. In variant, the two sets of p resistive elements 1 can be shifted by λ/2m + jλ (j being an integer) from each other.

Figure 4 shows resistive groups comprising a parallelogram repartition of two sets of two resistive elements 1 having a geometrical barycentre spaced by λ/2n (n = 3) from each other, said sets being shifted by λ/2m (m = 12) from each other in order to further filter harmonics 12 [24]. As a generalization, it is possible to use two of such repartition and to shift them by λ/2q from each other in order to further filter harmonics q [2q].

Figure 5 shows resistive groups comprising a linear repartition of two sets of two resistive elements 1 having a geometrical barycentre spaced by λ/2n (n = 3) from each other, said sets being shifted by λ/2m (m = 12) from each other in order to further filter harmonics 12 [24].

In relation with figure 6, at least one of the G resistive groups is formed in a strip 2 of resistive material. In particular, some sensors, like thick film piezoresistive sensing elements used to measure strain, are screen printed on a substrate. Several electrical contacts 3 used to connect the resistive elements 1 are disposed within the strip 2, notably by screen printing, in order to delimit the resistive elements 1 between two of them.

This process allows to easily make sensors with different shapes thanks to a dedicated set of screens. In the embodiment shown, all of the G resistive groups are formed in a single strip 2 of resistive material.

## Claims

1. Sensor for measuring a periodic signal comprising several harmonics wherein the first harmonic has a λ spatial period, said sensor comprising an electrical circuit of G resistive groups arranged in a current loop circuit and having a geometrical barycentre spaced by λ/G + kλ, k being an integer, from each other, each of said groups comprising at least one set of p resistive elements (1) connected in series and having a geometrical barycentre spaced by λ/pn + iλ, i being an integer, from each other, n being different from G, in order to filter at least harmonics n modulo 2n of the signal, said sensor comprising determination means adapted for determining at least one output which is representative of the signal, said output comprising a combination of at least some voltages V_{G} across the G resistive groups.

2. Sensor according to claim 1, wherein the output is a linear combination of the voltages V_{G}.

3. Sensor according to claim 1 or 2, wherein at least one of the G resistive groups comprises at least two sets of p resistive elements (1) connected in series.

4. Sensor according to claim 3, wherein two sets of p resistive elements (1) are shifted by λ/2m + jλ, j being an integer, from each other, m being different from n, the output comprising a combination of at least some voltages V_{G} across the G resistive groups in order to further filter harmonics m modulo 2m of the signal.

5. Sensor according to claim 4, wherein at least one of the G resistive groups comprises a linear repartition of two sets of two resistive elements (1) having a geometrical barycentre spaced by λ/2n from each other, said sets being shifted by λ/2m from each other.

6. Sensor according to claim 4, wherein at least one of the G resistive groups comprises a parallelogram repartition of two sets of two resistive elements (1) having a geometrical barycentre spaced by λ/2n from each other, said sets being shifted by λ/2m from each other.

7. Sensor according to any of claims 1 to 6, wherein four resistive groups are arranged in the current loop circuit.

8. Sensor according to any of claims 1 to 7, wherein the determination means are adapted for calculating SIN and COS signals by linear combination of the voltages V_{G}.

9. Sensor according to claim 8, wherein SIN = (V₁ - V₂) - (V₃ - V₄) and COS = 2 (V₂ - V₃).

10. Sensor according to any of claims 1 to 9, wherein at least one of the G resistive groups is formed in a strip (2) of resistive material, several electrical contacts (3) being disposed within said strip in order to delimit the resistive elements (1) between two of them.

11. Sensor according to claim 10, wherein all of the G resistive groups are formed in a single strip (2) of resistive material.

12. Sensor according to any of claims 1 to 11, wherein the resistive elements (1) include Hall effect sensors, magnetoresistors, resistive or piezoresistive strain gauges.

13. Use of a sensor according to claims 1 to 12 to measure angular data of a rotating member delivering a magnetic sine shape signal.

14. Use of a sensor according to claims 1 to 12 to measure linear data of a moving member delivering a magnetic sine shape signal.

15. Use of a sensor according to claims 1 to 12 to measure periodic mechanical deformations of a structural body.

## Patentansprüche

1. Sensor zum Messen eines periodischen Signals, das mehrere Harmonische umfasst, wobei die erste Harmonische eine räumliche Periode λ besitzt, wobei der Sensor eine elektrische Schaltung aus G Widerstandsgruppen umfasst, die in einer Stromschleifenschaltung angeordnet sind und einen geometrischen Schwerpunkt besitzen, die um λ/G + kλ voneinander beabstandet sind, wobei k eine ganze Zahl ist, wobei jede der Gruppen mindestens einen Satz aus p Widerstandselementen (1) umfasst, die in Reihe geschaltet sind und einen geometrischen Schwerpunkt besitzen, die um λ/pn + iλ voneinander beabstandet sind, wobei i eine ganze Zahl ist, wobei n von G verschieden ist, um mindestens Harmonische n Modulo 2n aus dem Signal zu filtern, wobei der Sensor Bestimmungsmittel umfasst, die dafür ausgebildet sind, mindestens einen Ausgang zu bestimmen, der für das Signal repräsentativ ist, wobei der Ausgang eine Kombination aus mindestens einigen Spannungen V_{G} über die G Widerstandsgruppen umfasst.

2. Sensor nach Anspruch 1, wobei der Ausgang eine lineare Kombination der Spannungen V_{G} ist.

3. Sensor nach Anspruch 1 oder 2, wobei mindestens eine der G Widerstandsgruppen mindestens zwei Sätze aus p Widerstandselementen (1) umfasst, die in Reihe geschaltet sind.

4. Sensor nach Anspruch 3, wobei zwei Sätze aus p Widerstandselementen (1) um λ/2m + jA voneinander verschoben sind, wobei j eine ganze Zahl ist, wobei m von n verschieden ist, wobei der Ausgang eine Kombination aus mindestens einigen Spannungen V_{G} über die G Widerstandsgruppen umfasst, um weiter Harmonische m Modulo 2m aus dem Signal zu filtern.

5. Sensor nach Anspruch 4, wobei mindestens eine der G Widerstandsgruppen eine lineare Verteilung von zwei Sätzen aus zwei Widerstandselementen (1) umfasst, die einen geometrischen Schwerpunkt besitzen, die um λ/2n voneinander beabstandet sind, wobei die Sätze um λ/2m voneinander verschoben sind.

6. Sensor nach Anspruch 4, wobei mindestens eine der G Widerstandsgruppen eine Parallelogrammverteilung von zwei Sätzen aus zwei Widerstandselementen (1) umfasst, die einen geometrischen Schwerpunkt besitzen, die um λ/2n voneinander beabstandet sind, wobei die Sätze um λ/2m voneinander verschoben sind.

7. Sensor nach einem der Ansprüche 1 bis 6, wobei vier Widerstandsgruppen in der Stromschleifenschaltung angeordnet sind.

8. Sensor nach einem der Ansprüche 1 bis 7, wobei die Bestimmungsmittel dazu ausgebildet sind, SIN- und COS-Signale durch lineare Kombination der Spannungen V_{G} zu berechnen.

9. Sensor nach Anspruch 8, wobei SIN = (V₁ - V₂) - (V₃ - V₄) und COS = 2 (V₂ - V₃).

10. Sensor nach einem der Ansprüche 1 bis 9, wobei mindestens eine der G Widerstandsgruppen in einem Streifen (2) aus Widerstandsmaterial gebildet sind, wobei mehrere elektrische Kontakt (3) innerhalb des Streifens vorgesehen sind, um die Widerstandselemente (1) zwischen zwei davon zu begrenzen.

11. Sensor nach Anspruch 10, wobei alle der G Widerstandsgruppen in einem einzelnen Streifen (2) aus Widerstandsmaterial gebildet sind.

12. Sensor nach einem der Ansprüche 1 bis 11, wobei die Widerstandselemente (1) Halleffektsensoren, Magnetowiderstände, Widerstands- oder Piezowiderstands-Dehnungsmesser einschließen.

13. Verwendung eines Sensors nach den Ansprüchen 1 bis 12, um Winkeldaten eines drehenden Teils zu messen, das ein sinusförmiges magnetisches Signal liefert.

14. Verwendung eines Sensors nach den Ansprüchen 1 bis 12, um lineare Daten eines sich bewegenden Teils zu messen, das ein sinusförmiges magnetisches Signal liefert.

15. Verwendung eines Sensors nach den Ansprüchen 1 bis 12, um periodische mechanische Verformungen eines Strukturkörpers zu messen.

## Revendications

1. Capteur pour mesurer un signal périodique comprenant plusieurs harmoniques dans lequel la première harmonique a une période spatiale λ, ledit capteur comprenant un circuit électrique de G groupes résistifs disposés dans un circuit en boucle de courant et ayant un barycentre géométrique espacés de λ/G + kλ, k étant un entier, les uns des autres, chacun desdits groupes comprenant au moins un jeu de p éléments résistifs (1) connectés en série et ayant un barycentre géométrique espacés de λ/pn + iλ, i étant un entier, les uns des autres, n étant différent de G, afin de filtrer au moins les harmoniques n modulo 2n du signal, ledit capteur comprenant des moyens de détermination adaptés pour déterminer au moins une sortie qui est représentative du signal, ladite sortie comprenant une combinaison d'au moins certaines tensions V_{G} dans les G groupes résistifs.

2. Capteur selon la revendication 1, dans lequel la sortie est une combinaison linéaire des tensions V_{G}.

3. Capteur selon la revendication 1 ou 2, dans lequel au moins un des G groupes résistifs comprend au moins deux jeux de p éléments résistifs (1) connectés en série.

4. Capteur selon la revendication 3, dans lequel deux jeux de p éléments résistifs (1) sont décalés de λ/2m + jλ, j étant un entier, l'un par rapport à l'autre, m étant différent de n, la sortie comprenant une combinaison d'au moins certaines tensions V_{G} dans les G groupes résistifs afin de filtrer en outre les harmoniques m modulo 2m du signal.

5. Capteur selon la revendication 4, dans lequel au moins un des G groupes résistifs comprend une répartition linéaire de deux jeux de deux éléments résistifs (1) ayant un barycentre géométrique espacés de λ/2n l'un de l'autre, lesdits jeux étant décalés de λ/2m l'un de l'autre.

6. Capteur selon la revendication 4, dans lequel au moins un des G groupes résistifs comprend une répartition en parallélogramme de deux jeux de deux éléments résistifs (1) ayant un barycentre géométrique espacés de λ/2n l'un de l'autre, lesdits jeux étant décalés de λ/2m l'un de l'autre.

7. Capteur selon l'une quelconque des revendications 1 à 6, dans lequel quatre groupes résistifs sont disposés dans le circuit en boucle de courant.

8. Capteur selon l'une quelconque des revendications 1 à 7, dans lequel les moyens de détermination sont adaptés pour calculer les signaux SIN et COS par combinaison linéaire des tensions V_{G}.

9. Capteur selon la revendication 8, dans lequel SIN = (V₁ - V₂) - (V₃ - V₄) et COS = 2 (V₂ - V₃).

10. Capteur selon l'une quelconque des revendications 1 à 9, dans lequel au moins un des G groupes résistifs est formé dans une bande (2) de matériau résistif, plusieurs contacts électriques (3) étant disposés dans ladite bande afin de délimiter les éléments résistifs (1) entre deux d'entre eux.

11. Capteur selon la revendication 10, dans lequel tous les G groupes résistifs sont formés dans une seule bande (2) de matériau résistif.

12. Capteur selon l'une quelconque des revendications 1 à 11, dans lequel les éléments résistifs (1) comprennent des capteurs à effet Hall, des magnétorésistances, des jauges de contrainte résistives ou piézorésistives.

13. Utilisation d'un capteur selon les revendications 1 à 12 pour mesurer des données angulaires d'un élément rotatif délivrant un signal sinusoïdal magnétique.

14. Utilisation d'un capteur selon les revendications 1 à 12 pour mesurer des données linéaires d'un élément mobile délivrant un signal sinusoïdal magnétique.

15. Utilisation d'un capteur selon les revendications 1 à 12 pour mesurer des déformations mécaniques périodiques d'un corps structurel.
